# EUROPÄISCHE PATENTSCHRIFT

(11) **EP 3 221 163 B1**
(45) Veröffentlichungstag und Bekanntmachung des Hinweises auf die Patenterteilung: **27.02.2019**
(21) Anmeldenummer: 15778332.5
(22) Anmeldetag: 12.10.2015
(51) Int. Cl.: B60G 7/00

(54) **STRUKTURBAUTEIL FÜR EIN KRAFTFAHRZEUG**
STRUCTURAL COMPONENT FOR A MOTOR VEHICLE
COMPOSANT STRUCTUREL POUR VÉHICULE AUTOMOBILE

(30) Priorität: 18.11.2014 DE 102014223478
(43) Veröffentlichungstag der Anmeldung: 27.09.2017
(73) Patentinhaber: ZF Friedrichshafen AG, 88046 Friedrichshafen (DE)
(72) Erfinder: BRONSWICK, Philipp, 49179 Ostercappeln (DE); KUHLMANN, Sven, 49448 Lemförde (DE)
(86) Internationale Anmeldenummer: PCT/EP2015/073501
(87) Internationale Veröffentlichungsnummer: WO 2016/078830

(56) Entgegenhaltungen:
- WO-A1-2005/087520
- WO-A1-2014/147754
- DE-A1-102011 053 222
- DE-U1-202010 008 058
- JP-A- H0 725 215
- JP-A- H08 200 418
- JP-A- H08 210 408
- JP-A- S61 233 214
- JP-A- 2003 002 025
- JP-A- 2005 059 046
- JP-A- 2010 023 713
- US-A- 3 121 348

## Beschreibung

Die Erfindung betrifft ein Strukturbauteil für ein Kraftfahrzeug, mit einem aus einem Blech gebildeten Bauteilkörper, der wenigstens einen aus dem Blech geformten, schalenförmigen Körperteil und wenigstens eine aus dem Blech geformte und sich entlang ihres Umfangs zwischen zwei umfangsseitigen Enden erstreckende Aufnahmebuchse umfasst, die an einem ihrer umfangsseitigen Enden in den schalenförmigen Körperteil und an einem anderen ihrer umfangseitigen Enden in eine aus dem Blech geformte und an dem schalenförmigen Körperteil festgelegte Befestigungslasche übergeht. Ferner betrifft die Erfindung ein Verfahren zur Herstellung eines einen Bauteilkörper umfassenden Strukturbauteils für ein Kraftfahrzeug.

Derartige Strukturbauteile sind jeweils aus der JP H08 210408 A, der DE 10 2011 053222 A1 und WO 2014/147754 A1 bekannt. Hierbei werden jeweils zwei einander zugewandte Flächen aufeinander gelegt und miteinander gefügt.

Aus der US 3 121 348 A, der JP 2010 023713 A und der JP 2003 002025 A ist jeweils ein Strukturbauteil bekannt, das zum Ausbilden eines Hohlprofils mindestens zwei miteinander gefügte Blechprofile aufweist.

Die WO 2005/087520 A1 offenbart einen Führungslenker für die Radaufhängung eines Kraftfahrzeuges, mit einem aus mindestens einem Metallblechteil geformten Lenkerkörper und mit mindestens einem Anlenkpunkt für die Verbindung zu einem karosserieseitigen Befestigungspunkt, wobei der Anlenkpunkt als kreisförmige Aufnahmebuchse für ein elastisches Lagerelement ausgebildet ist. Die Wandung der Aufnahmebuchse ist einstückig mit dem Lenkerkörper ausgeformt und besteht aus einem ringförmig ausgebildeten Lagerbereich sowie aus einer am Lenkerkörper festgelegten Befestigungslasche. Zur Erzielung einer höheren Steifigkeit ist der Lenkerkörper aus einem Unterblech und einem Oberblech aufgebaut, das mit dem Unterblech verschweißt ist. Die Aufnahmebuchse ist im unbearbeiteten Zustand des Lenkerkörpers als Lasche des Unterbleches ausgestaltet und wird im Rahmen des Herstellvorganges so umgeformt, dass sich sowohl der ringförmig ausgebildete Lagerbereich als auch die Befestigungslasche ergibt, die auf der Oberseite des Oberbleches zur Anlage kommt und dort durch Klebung, Schweißung oder Nietung am Oberblech befestigt wird.

Nachteilig hieran ist, dass sowohl das Unterblech als auch das Oberblech separat gefertigt und anschließend miteinander verbunden werden müssen.

Ausgehend hiervon liegt der Erfindung die Aufgabe zugrunde, einem Strukturbauteil der eingangs genannten Art eine relativ hohe Steifigkeit bei vergleichsweise geringem Fertigungsaufwand verleihen zu können.

Diese Aufgabe wird durch ein Strukturbauteil nach Anspruch 1 und durch ein Verfahren nach Anspruch 12 gelöst. Bevorzugte Weiterbildungen des Strukturbauteils und des Verfahrens sind in den jeweiligen Unteransprüchen und in der nachfolgenden Beschreibung gegeben.

Das Strukturbauteil für ein Kraftfahrzeug umfasst einen aus einem Blech gebildeten Bauteilkörper, der einen oder wenigstens einen aus dem Blech geformten, schalenförmigen Körperteil und eine oder wenigstens eine aus dem Blech geformte und sich entlang ihres Umfangs zwischen zwei umfangsseitigen Enden erstreckende Aufnahmebuchse umfasst, die an einem ihrer umfangsseitigen Enden in den schalenförmigen Körperteil und an einem anderen ihrer umfangseitigen Enden in eine aus dem Blech geformte und an dem schalenförmigen Körperteil festgelegte Befestigungslasche übergeht, wobei die Befestigungslasche den schalenförmigen Körperteil zumindest bereichsweise zu einem geschlossenen Hohlprofil ergänzt. Dadurch, dass die Befestigungslasche den schalenförmigen Körperteil zumindest bereichsweise zu einem geschlossenen Hohlprofil ergänzt, kann die Steifigkeit des Strukturbauteils im Bereich des geschlossenen Hohlprofils erhöht werden, ohne dass dafür ein zusätzliches Blech erforderlich ist. Der Bauteilkörper kann somit aus lediglich einem einzigen Blech gebildet sein, wodurch der Fertigungsaufwand reduzierbar ist.

Der schalenförmige Körperteil geht unter Zwischenschaltung der Aufnahmebuchse einstückig in die Befestigungslasche über.

Die Aufnahmebuchse ist insbesondere einstückig mit dem schalenförmigen Körperteil ausgebildet und/oder ausgeformt. Ferner ist die Aufnahmebuchse insbesondere einstückig mit der Befestigungslasche ausgebildet und/oder ausgeformt. Vorzugsweise ist die Aufnahmebuchse zwischen dem schalenförmigen Körperteil und der Befestigungslasche angeordnet. Bevorzugt sind der schalenförmige Körperteil, die Aufnahmebuchse und die Befestigungslasche aus demselben Blech gebildet. Insbesondere sind der schalenförmige Körperteil, die Aufnahmebuchse und die Befestigungslasche aus einem einzigen Blech gebildet. Die Aufnahmebuchse geht an ihrem einen umfangsseitigen Ende vorzugsweise materialhomogen in den schalenförmigen Körperteil über. Ferner geht die Aufnahmebuchse an ihrem anderen umfangsseitigen Ende vorzugsweise materialhomogen in die Befestigungslasche über. Vorteilhaft geht der schalenförmige Körperteil unter Zwischenschaltung der Aufnahmebuchse in die Befestigungslasche, insbesondere materialhomogen, über.

Bevorzugt ist der schalenförmige Körperteil zumindest bereichsweise als offenes Hohlprofil ausgebildet. Insbesondere ist der schalenförmige Körperteil zumindest bereichsweise als U-Profil ausgebildet.

Gemäß einer Ausgestaltung ist die Befestigungslasche an dem schalenförmigen Körperteil stoffschlüssig und/oder formschlüssig festgelegt. Beispielsweise ist die Befestigungslasche an dem schalenförmigen Körperteil durch Klebung und/oder Schweißung und/oder Nietung festgelegt. Vorzugsweise ist die Befestigungslasche mit dem schalenförmigen Körperteil verschweißt. Hierdurch ist die Befestigungslasche insbesondere an dem schalenförmigen Körperteil festgelegt.

Erfindungsgemäß weist der schalenförmige Körperteil einen Rücken und zwei sich von diesem wegerstreckende Schenkel auf, die über den Rücken miteinander verbunden sind. Vorzugsweise liegen die Schenkel einander gegenüber. Insbesondere erstrecken sich die Schenkel in derselben Richtung oder in näherungsweise derselben Richtung von dem Rücken weg. Die beiden Schenkel verlaufen beispielsweise parallel oder näherungsweise parallel zueinander. Insbesondere schließen die Schenkel mit dem Rücken jeweils einen rechten Winkel oder einen näherungsweise rechten Winkel ein. Bevorzugt verläuft die Befestigungslasche zwischen den beiden Schenkeln, insbesondere im Abstand zu dem Rücken. Die Befestigungslasche verläuft bevorzugt parallel oder näherungsweise parallel zu dem Rücken.

Die Schenkel weisen auf ihrer dem Rücken abgewandten Seite insbesondere freie Enden auf. Gemäß einer Weiterbildung sind die Schenkel an ihren dem Rücken abgewandten, freien Enden aufeinander zu gebogen. Insbesondere verlaufen die abgebogenen freien Enden der Schenkel parallel oder näherungsweise parallel zu dem Rücken. Vorteilhaft verläuft die Befestigungslasche zwischen den abgebogenen freien Enden und dem Rücken. Insbesondere liegt die Befestigungslasche, z.B. mit ihrer dem Rücken abgewandten oder zugewandten Seite, an den abgebogenen freien Enden an.

Gemäß einer Ausgestaltung ist die Befestigungslasche an den Schenkeln stoffschlüssig und/oder formschlüssig festgelegt. Beispielsweise ist die Befestigungslasche an den Schenkeln durch Klebung und/oder Schweißung und/oder Nietung festgelegt. Vorzugsweise ist die Befestigungslasche mit den Schenkeln verschweißt. Hierdurch ist die Befestigungslasche insbesondere an dem schalenförmigen Körperteil festgelegt.

Gemäß einer Ausgestaltung ist die Aufnahmebuchse ringförmig oder zylinderförmig ausgebildet. Bevorzugt ist die Aufnahmebuchse als Zylinder oder Ring oder als offener Zylinder oder offener Ring ausgebildet. Vorteilhaft ist die Aufnahmebuchse mit einer zwischen ihren beiden umfangsseitigen Enden liegenden Trennfuge versehen. Die umfangsseitigen Enden der Aufnahmebuchse bilden bevorzugt die Ränder der Trennfuge. Insbesondere ist die Wandung der Aufnahmebuchse durch das Blech gebildet und/oder aus dem Blech geformt und/oder gebogen. Bevorzugt geht die Wandung der Aufnahmebuchse an ihrem einen umfangsseitigen Ende in den schalenförmigen Körperteil und an ihrem anderen umfangsseitigen Ende in die Befestigungslasche, insbesondere materialhomogen, über.

Das Blech besteht bevorzugt aus Metall, insbesondere aus Stahl, beispielsweise aus vergütetem Material oder Metall, wie z.B. aus vergütetem Stahl. Das Umformen des Blechs erfolgt z.B. durch Stanzen und/oder Tiefziehen und/oder Presshärten und/oder Biegen. Der Bauteilkörper besteht bevorzugt aus Metall, insbesondere aus Stahl, beispielsweise aus vergütetem Material oder Metall, wie z.B. aus vergütetem Stahl.

Der Bauteilkörper und/oder der schalenförmige Körperteil erstreckt sich insbesondere in einer Längsrichtung, wobei die Aufnahmebuchse bevorzugt an einem axialen Ende des Bauteilkörpers und/oder des schalenförmigen Körperteils vorgesehen ist. Der schalenförmige Körperteil erstreckt sich in Längsrichtung vorzugsweise gerade oder im Wesentlichen gerade. Ferner erstreckt sich die Befestigungslasche bevorzugt in Längsrichtung gerade oder im Wesentlichen gerade.

Die Symmetrieachse der Aufnahmebuchse verläuft insbesondere senkrecht zur Längsrichtung. Die Symmetrieachse der Aufnahmebuchse ist vorzugsweise eine Mittelachse und/oder Rotationsachse der Aufnahmebuchse. Bevorzugt definieren die Längsrichtung und die Symmetrieachse der Aufnahmebuchse eine Mittellängsebene des Strukturbauteils und/oder des Bauteilkörpers. Insbesondere liegt die Symmetrieachse der Aufnahmebuchse in der Mittellängsebene, die sich in Längsrichtung erstreckt. Vorzugsweise verläuft die Befestigungslasche in oder parallel zu der Mittellängsebene. Ferner verläuft der Rücken des schalenförmigen Körperteils bevorzugt in oder parallel zu der Mittellängsebene. Vorteilhaft verlaufen die Schenkel des schalenförmigen Körperteils senkrecht oder näherungsweise senkrecht zu der Mittellängsebene.

Bevorzugt ist in die Aufnahmebuchse ein Elastomerlager eingesetzt, welches beispielsweise ein Gummilager ist. Das Elastomerlager umfasst bevorzugt ein Innenteil und einen dieses umringenden Elastomerkörper, der beispielsweise ein Gummikörper ist. Das Innenteil erstreckt sich bevorzugt in Richtung der Symmetrieachse der Aufnahmebuchse. Das Elastomerlager kann direkt mit seinem Elastomerkörper in die Aufnahmebuchse eingesetzt sein. Vorteilhaft umfasst das Elastomerlager aber eine den Elastomerkörper umringende Außenhülse. In diesem Fall ist das Elastomerlager bevorzugt mit seiner Außenhülse in die Aufnahmebuchse eingesetzt. Die Außenhülse ist insbesondere zylinderförmig ausgebildet. Die Symmetrieachse der Außenhülse fällt vorzugsweise mit der Symmetrieachse der Aufnahmebuchse zusammen. Die Symmetrieachse der Außenhülse ist insbesondere eine Mittelachse und/oder Rotationsachse der Außenhülse.

Bevorzugt ist, insbesondere im Abstand zu der Aufnahmebuchse, ein oder wenigstens ein anderes Elastomerlager und/oder ein oder wenigstens ein Gelenk an dem Bauteilkörper und/oder an dem schalenförmigen Körperteil befestigt. Das Gelenk ist insbesondere ein Kugelgelenk. Das andere Elastomerlager und/oder das Gelenk sind insbesondere an einem anderen axialen Ende des Bauteilkörpers und/oder des schalenförmigen Körperteils vorgesehen. Das andere Elastomerlager umfasst bevorzugt ein Innenteil und einen dieses umringenden Elastomerkörper. Vorteilhaft umfasst das andere Elastomerlager auch eine seinen Elastomerkörper umringende Außenhülse.

Gemäß einer Weiterbildung umfasst der Bauteilkörper einen aus dem Blech gebildeten oder geformten Anschlussbereich, der insbesondere im Abstand zu der Aufnahmebuchse vorgesehen ist. Beispielsweise geht der Anschlussbereich in den schalenförmigen Körperteil, insbesondere materialhomogen, über. Vorteilhaft ist der Anschlussbereich mit dem schalenförmigen Körperteil einstückig ausgebildet und/oder ausgeformt. Bevorzugt ist das Gelenk an oder in dem Anschlussbereich befestigt. Vorzugsweise ist das Gelenk an oder in dem Anschlussbereich an dem Bauteilkörper befestigt. Insbesondere ist der Anschlussbereich an dem anderen axialen Ende des Bauteilkörpers und/oder des schalenförmigen Körperteils vorgesehen. Das Gelenk umfasst bevorzugt ein Gelenkgehäuse und ein bewegbar in diesem gelagertes Gelenkinnenteil, welches sich vorzugsweise aus dem Gelenkgehäuse heraus erstreckt. Das Gelenkinnenteil ist insbesondere ein eine Gelenkkugel umfassender Kugelzapfen, der mit seiner Gelenkkugel bewegbar in dem Gelenkgehäuse gelagert ist. Vorteilhaft umfasst der Anschlussbereich eine Montageöffnung, in die das Gelenkgehäuse eingesetzt ist. Die Montageöffnung ist bevorzugt eine durchgehende Öffnung.

Gemäß einer Ausgestaltung umfasst der Bauteilkörper eine aus dem Blech geformte und sich entlang ihres Umfangs zwischen zwei umfangsseitigen Enden erstreckende andere Aufnahmebuchse, die an einem ihrer umfangsseitigen Enden in den schalenförmigen Körperteil und an einem anderen ihrer umfangseitigen Enden in eine aus dem Blech geformte und an dem schalenförmigen Körperteil festgelegte andere Befestigungslasche übergeht, wobei die andere Befestigungslasche den schalenförmigen Körperteil zumindest bereichsweise zu einem geschlossenen Hohlprofil ergänzt. Die Aufnahmebuchsen sind insbesondere im Abstand zueinander angeordnet. Vorteilhaft ist die andere Aufnahmebuchse an dem anderen axialen Ende des Bauteilkörpers und/oder des schalenförmigen Körperteils vorgesehen. Bevorzugt ist in die andere Aufnahmebuchse das andere oder ein anderes Elastomerlager eingesetzt.

Gemäß einer Weiterbildung umfasst der Bauteilkörper einen aus dem Blech geformten, zweiten schalenförmigen Körperteil und wenigstens eine aus dem Blech geformte und sich entlang ihres Umfangs zwischen zwei umfangsseitigen Enden erstreckende zweite Aufnahmebuchse, die an einem ihrer umfangsseitigen Enden in den zweiten schalenförmigen Körperteil und an einem anderen ihrer umfangseitigen Enden in eine aus dem Blech geformte und an dem zweiten schalenförmigen Körperteil festgelegte zweite Befestigungslasche übergeht, wobei die zweite Befestigungslasche den zweiten schalenförmigen Körperteil zumindest bereichsweise zu einem geschlossenen Hohlprofil ergänzt. Die Aufnahmebuchsen sind insbesondere im Abstand zueinander angeordnet. Bevorzugt ist in die zweite Aufnahmebuchse ein zweites Elastomerlager eingesetzt. Vorzugsweise gehen die beiden schalenförmigen Körperteile, insbesondere materialhomogen, ineinander über. Vorteilhaft sind die beiden schalenförmigen Körperteile einstückig miteinander ausgebildet und/oder ausgeformt. Das zweite Elastomerlager umfasst bevorzugt ein Innenteil und einen dieses umringenden Elastomerkörper. Vorteilhaft umfasst das zweite Elastomerlager auch eine seinen Elastomerkörper umringende Außenhülse.

Gemäß einer Weiterbildung ist im Abstand zu den Aufnahmebuchsen das Gelenk an dem Bauteilkörper befestigt. Insbesondere ist der Anschlussbereich im Abstand zu den Aufnahmebuchsen vorgesehen. Das Gelenk und die Aufnahmebuchsen definieren bevorzugt die Ecken eines Dreiecks. Vorteilhaft geht der Anschlussbereich in die schalenförmigen Körperteile, insbesondere materialhomogen, über. Bevorzugt ist der Anschlussbereich mit den schalenförmigen Körperteilen einstückig ausgebildet und/oder ausgeformt.

Das Strukturbauteil bildet insbesondere eine Gelenkstange, eine Pendelstütze oder einen Lenker für eine Radaufhängung und/oder Achsaufhängung eines Kraftfahrzeugs. Bei dem Lenker handelt es sich z.B. um einen Dreiecklenker. Insbesondere ist oder wird das Strukturbauteil in eine Radaufhängung und/oder Achsaufhängung eines Kraftfahrzeugs eingebaut. Vorteilhaft ist oder wird das Strukturbauteil mittels des Elastomerlagers mit einem Fahrzeugbauteil verbunden. Bei dem Fahrzeugbauteil handelt es sich z.B. um ein Fahrwerkbauteil oder einen Fahrzeugaufbau des Kraftfahrzeugs. Bevorzugt ist oder wird das Strukturbauteil mittels des anderen oder zweiten Elastomerlagers mit dem oder mit einem anderen Fahrzeugbauteil verbunden. Bei dem anderen Fahrzeugbauteil handelt es sich z.B. um ein anderes Fahrwerkbauteil des Kraftfahrzeugs. Vorzugsweise ist oder wird das Strukturbauteil mittels des Gelenks mit einem weiteren Fahrzeugbauteil verbunden. Bei dem weiteren Fahrzeugbauteil handelt es sich z.B. um ein weiteres Fahrwerkbauteil oder den Fahrzeugaufbau des Kraftfahrzeugs.

Die Erfindung betrifft ferner ein Verfahren zur Herstellung eines einen Bauteilkörper umfassenden Strukturbauteils für ein Kraftfahrzeug, wobei zur Bildung des Bauteilkörpers ein Blech zu einem Rohling mit einem oder wenigstens einem schalenförmigen Körperteil umgeformt wird, ein oder wenigstens ein sich an den schalenförmigen Körperteil anschließender Zwischenbereich des Rohlings zu einer Aufnahmebuchse umgeformt, insbesondere gebogen, wird und ein sich an den Zwischenbereich und/oder die Aufnahmebuchse anschließender Endbereich des Rohlings an dem schalenförmigen Körperteil festgelegt wird und somit eine Befestigungslasche bildet, wobei der Endbereich des Rohlings derart an dem schalenförmigen Körperteil festgelegt wird, dass die Befestigungslasche den schalenförmigen Körperteil zumindest bereichsweise zu einem geschlossenen Hohlprofil ergänzt. Der schalenförmige Körperteil geht unter Zwischenschaltung der Aufnahmebuchse einstückig in die Befestigungslasche über.

Das zuvor beschriebene Strukturbauteil wird insbesondere nach dem Verfahren hergestellt und kann gemäß allen im Zusammenhang mit dem Verfahren erläuterten Ausgestaltungen weitergebildet sein. Ferner kann das Verfahren gemäß allen im Zusammenhang mit dem Strukturbauteil erläuterten Ausgestaltungen weitergebildet sein.

Bevorzugt wird beim Umformen des Blechs zu dem Rohling der schalenförmige Körperteil zumindest bereichsweise zu einem offenen Hohlprofil geformt. Insbesondere wird beim Umformen des Blechs zu dem Rohling der schalenförmige Körperteil zumindest bereichsweise zu einem U-Profil geformt.

Gemäß einer Ausgestaltung wird der Endbereich des Rohlings an dem schalenförmigen Körperteil stoffschlüssig und/oder formschlüssig festgelegt. Beispielsweise wird der Endbereich des Rohlings an dem schalenförmigen Körperteil durch Verkleben und/oder Verschweißen und/oder Vernieten festgelegt. Vorzugsweise wird der Endbereich des Rohlings mit dem schalenförmigen Körperteil verschweißt. Hierdurch wird der Endbereich des Rohlings insbesondere an dem schalenförmigen Körperteil festgelegt.

Erfindungsgemäß wird beim Umformen des Blechs zu dem Rohling der schalenförmige Körperteil mit einem Rücken und mit zwei sich von diesem wegerstreckenden Schenkeln versehen, die über den Rücken miteinander verbunden sind. Vorzugsweise liegen die Schenkel einander gegenüber. Insbesondere erstrecken sich die Schenkel in derselben Richtung oder in näherungsweise derselben Richtung von dem Rücken weg. Die beiden Schenkel verlaufen beispielsweise parallel oder näherungsweise parallel zueinander. Vorteilhaft schließen die Schenkel mit dem Rücken jeweils einen rechten Winkel oder einen näherungsweise rechten Winkel ein. Bevorzugt wird der Endbereich des Rohlings in den zwischen den beiden Schenkeln liegenden Raumbereich eingebracht, insbesondere im Abstand zu dem Rücken. Vorzugsweise wird der Endbereich des Rohlings derart in den zwischen den beiden Schenkeln liegenden Raumbereich eingebracht, dass er parallel oder näherungsweise parallel zu dem Rücken verläuft.

Gemäß einer Ausgestaltung wird der Endbereich des Rohlings an den Schenkeln stoffschlüssig und/oder formschlüssig festgelegt. Beispielsweise wird der Endbereich des Rohlings an den Schenkeln durch Verkleben und/oder Verschweißen und/oder Vernieten festgelegt. Vorzugsweise wird der Endbereich des Rohlings mit den Schenkeln verschweißt. Hierdurch wird der Endbereich des Rohlings insbesondere an dem schalenförmigen Körperteil festgelegt.

Die Aufnahmebuchse wird bevorzugt ringförmig oder zylinderförmig ausgebildet und/oder geformt, insbesondere gebogen. Gemäß einer Ausgestaltung wird der Zwischenbereich des Rohlings ringförmig oder zylinderförmig zu der Aufnahmebuchse umgeformt und/oder gebogen. Bevorzugt wird der Zwischenbereich des Rohlings zu der Aufnahmebuchse in Form eines Zylinders oder Rings oder eines offenen Zylinders oder offenen Rings umgeformt und/oder gebogen. Der Zwischenbereich des Rohlings wird zu der Aufnahmebuchse insbesondere derart umgeformt und/oder gebogen, dass sich die Aufnahmebuchse entlang ihres Umfangs zwischen zwei umfangsseitigen Enden erstreckt. Dabei geht die Aufnahmebuchse bevorzugt an einem ihrer umfangsseitigen Enden in den schalenförmigen Körperteil und an einem anderen ihrer umfangsseitigen Enden in die Befestigungslasche und/oder den Endbereich des Rohlings über. Vorteilhaft wird der Zwischenbereich des Rohlings zu der Aufnahmebuchse derart gebogen, dass die Aufnahmebuchse eine zwischen ihren beiden umfangsseitigen Enden liegende Trennfuge aufweist. Die umfangsseitigen Enden der Aufnahmebuchse bilden dabei bevorzugt die Ränder der Trennfuge.

Das Blech wird bevorzugt aus Metall, insbesondere aus Stahl hergestellt. Beispielsweise wird das Blech aus vergütetem Material oder Metall, wie z.B. aus vergütetem Stahl hergestellt. Das Umformen des Blechs zu dem Rohling, erfolgt z.B. durch Stanzen und/oder Tiefziehen und/oder Presshärten und/oder Biegen.

Das Blech wird bevorzugt derart zu dem Rohling umgeformt, dass der Rohling und/oder der schalenförmige Körperteil sich in einer Längsrichtung erstreckt. Insbesondere wird der Bauteilkörper und/oder der schalenförmige Körperteil derart gebildet, beispielsweise beim Umformen des Blechs zu dem Rohling, dass der Bauteilkörper und/oder der schalenförmige Körperteil sich in der oder in einer Längsrichtung erstreckt. Der Endbereich des Rohlings wird insbesondere derart an dem schalenförmigen Körperteil festgelegt, dass die Aufnahmebuchse ein axiales Ende des Rohlings und/oder des Bauteilkörpers und/oder des schalenförmigen Körperteils bildet. Beim Umformen des Blechs zu dem Rohling wird der schalenförmige Körperteil insbesondere derart gebildet, dass sich dieser in Längsrichtung gerade oder im Wesentlichen gerade erstreckt. Ferner wird der Endbereich des Rohlings insbesondere derart an dem schalenförmigen Körperteil festgelegt, dass er sich in Längsrichtung gerade oder im Wesentlichen gerade erstreckt.

Bevorzugt wird der Zwischenbereich des Rohlings derart zu der Aufnahmebuchse umgeformt und/oder gebogen, dass ihre Symmetrieachse senkrecht zur Längsrichtung verläuft. Die Symmetrieachse der Aufnahmebuchse ist vorzugsweise eine Mittelachse und/oder Rotationsachse der Aufnahmebuchse. Insbesondere definieren die Längsrichtung und die Symmetrieachse der Aufnahmebuchse eine Mittellängsebene des Strukturbauteil und/oder des Bauteilkörpers. Bevorzugt liegt die Symmetrieachse der Aufnahmebuchse in der Mittellängsebene, die sich in Längsrichtung erstreckt. Vorzugsweise wird der Endbereich des Rohlings derart an dem schalenförmigen Körperteil festgelegt, dass er in oder parallel zu der Mittellängsebene verläuft. Beim Umformen des Blechs zu dem Rohling wird der schalenförmige Körperteil insbesondere derart gebildet, dass der Rücken in oder parallel zu der Mittellängsebene verläuft. Vorteilhaft werden beim Umformen des Blechs zu dem Rohling die Schenkel derart gebildet, dass sie senkrecht oder näherungsweise senkrecht zu der Mittellängsebene verlaufen.

Bevorzugt wird in die Aufnahmebuchse ein Elastomerlager eingesetzt, welches beispielsweise ein Gummilager ist. Das Elastomerlager wird bevorzugt aus einem Innenteil und einen dieses umringenden Elastomerkörper gebildet, der beispielsweise ein Gummikörper ist. Bevorzugt wird das Elastomerlager derart in die Aufnahmebuchse eingesetzt, dass das Innenteil sich in Richtung der Symmetrieachse der Aufnahmebuchse erstreckt. Das Elastomerlager kann direkt mit seinem Elastomerkörper in die Aufnahmebuchse eingesetzt werden. Vorteilhaft wird das Elastomerlager aber mit einer den Elastomerkörper umringenden Außenhülse versehen. In diesem Fall wird das Elastomerlager bevorzugt mit seiner Außenhülse in die Aufnahmebuchse eingesetzt. Die Außenhülse wird insbesondere zylinderförmig ausgebildet. Bevorzugt wird das Elastomerlager derart in die Aufnahmebuchse eingesetzt und/oder das Elastomerlager derart mit der Außenhülse versehen, dass die Symmetrieachse der Außenhülse mit der Symmetrieachse der Aufnahmebuchse zusammenfällt. Die Symmetrieachse der Außenhülse ist insbesondere eine Mittelachse und/oder Rotationsachse der Außenhülse.

Bevorzugt wird, insbesondere im Abstand zu der Aufnahmebuchse, ein oder wenigstens ein anderes Elastomerlager und/oder ein oder wenigstens ein Gelenk an dem Bauteilkörper und/oder an dem schalenförmigen Körperteil befestigt. Das Gelenk ist insbesondere ein Kugelgelenk. Das andere Elastomerlager und/oder das Gelenk werden insbesondere an einem anderen axialen Ende des Bauteilkörpers und/oder des schalenförmigen Körperteils vorgesehen. Das andere Elastomerlager wird bevorzugt aus einem Innenteil und einen dieses umringenden Elastomerkörper gebildet. Vorteilhaft wird das andere Elastomerlager auch mit einer den Elastomerkörper umringenden Außenhülse versehen.

Gemäß einer Weiterbildung wird der Rohling und/oder Bauteilkörper mit einem Anschlussbereich versehen, der aus dem Blech gebildet oder geformt wird und insbesondere im Abstand zu der Aufnahmebuchse vorgesehen wird. Bevorzugt wird das Gelenk an oder in dem Anschlussbereich befestigt. Vorzugsweise wird das Gelenk an oder in dem Anschlussbereich an dem Bauteilkörper befestigt. Insbesondere wird der Anschlussbereich an dem anderen axialen Ende des Rohlings und/oder des Bauteilkörpers und/oder des schalenförmigen Körperteils vorgesehen. Das Gelenk wird bevorzugt aus einem Gelenkgehäuse und einem Gelenkinnenteil gebildet, welches bewegbar in dem Gelenkgehäuse gelagert wird und sich vorzugsweise aus diesem heraus erstreckt. Das Gelenkinnenteil ist insbesondere ein eine Gelenkkugel umfassender Kugelzapfen, der mit seiner Gelenkkugel bewegbar in dem Gelenkgehäuse gelagert wird. Vorteilhaft wird der Anschlussbereich mit einer Montageöffnung versehen, in die das Gelenkgehäuse eingesetzt wird. Die Montageöffnung wird bevorzugt als durchgehende Öffnung ausgebildet.

Die Erfindung wird nachfolgend anhand bevorzugter Ausführungsformen unter Bezugnahme auf die Zeichnung beschrieben. In der Zeichnung zeigen:
- Fig. 1: eine perspektivische Ansicht eines Strukturbauteils gemäß einer ersten Ausführungsform,
- Fig. 2: eine Draufsicht auf das Strukturbauteil nach Fig. 1,
- Fig. 3: einen Längsschnitt durch das Strukturbauteil gemäß der ersten Ausführungsform entlang der aus Fig. 2 ersichtlichen Schnittlinie A-A mit eingesetztem Gummilager,
- Fig. 4: einen Querschnitt durch das Strukturbauteil gemäß der ersten Ausführungsform entlang der aus Fig. 2 ersichtlichen Schnittlinie B-B,
- Fig. 5: eine perspektivische Ansicht eines Strukturbauteils gemäß einer zweiten Ausführungsform,
- Fig. 6: eine Draufsicht auf das Strukturbauteil nach Fig. 5,
- Fig. 7: einen Querschnitt durch das Strukturbauteil gemäß der zweiten Ausführungsform entlang der aus Fig. 6 ersichtlichen Schnittlinie C-C,
- Fig. 8: einen schematischen Längsschnitt durch das Strukturbauteil gemäß der zweiten Ausführungsform entlang der aus Fig. 6 ersichtlichen Schnittlinie D-D,
- Fig. 9: eine perspektivische Ansicht eines Strukturbauteils gemäß einer dritten Ausführungsform,
- Fig. 10: eine Seitenansicht des Strukturbauteils nach Fig. 9,
- Fig. 11: eine Draufsicht auf das Strukturbauteil nach Fig. 9,
- Fig. 12: einen schematischen Längsschnitt durch das Strukturbauteil gemäß der dritten Ausführungsform entlang der aus Fig. 11 ersichtlichen Schnittlinie E-E,
- Fig. 13: eine perspektivische Ansicht eines aus einem Blech geformten Rohlings zur Herstellung des Strukturbauteils gemäß der dritten Ausführungsform,
- Fig. 14: eine perspektivische Ansicht des Rohlings während eines Biegevorgangs,
- Fig. 15: eine perspektivische Ansicht des Rohlings bei weiter fortgeschrittenem Biegevorgang und
- Fig. 16: eine perspektivische Ansicht des Rohlings nach Abschluss des Biegevorgangs.

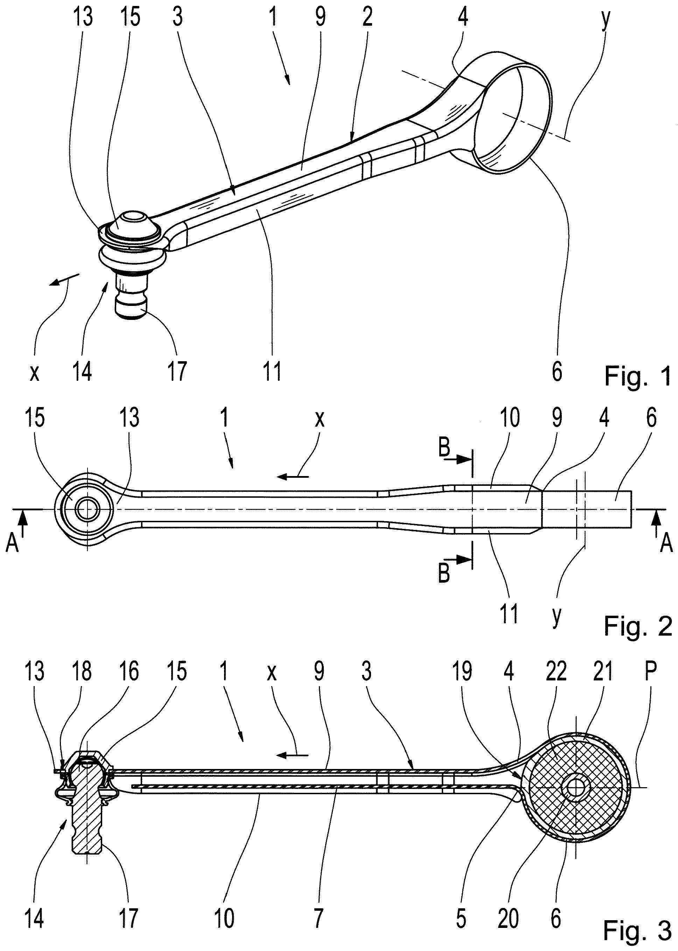

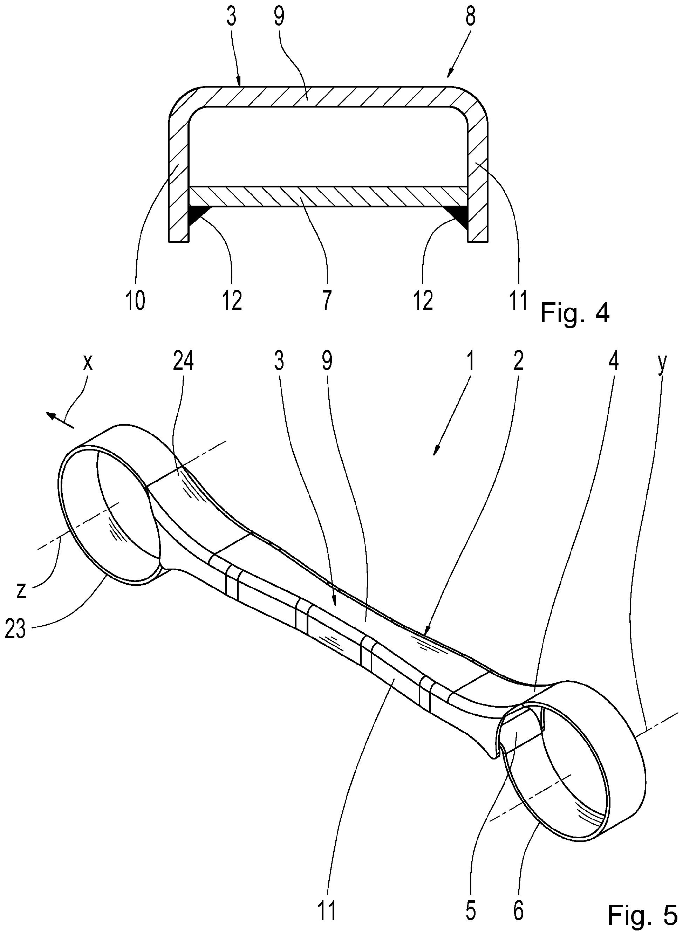

Aus den Fig. 1 bis 4 sind unterschiedliche Ansichten und Teilansichten eines Strukturbauteils 1 gemäß einer ersten Ausführungsform ersichtlich, wobei Fig. 1 eine perspektivische Ansicht des Strukturbauteils 1, Fig. 2 eine Draufsicht auf das Strukturbauteil 1, Fig. 3 einen Längsschnitt durch das Strukturbauteil 1 entlang der aus Fig. 2 ersichtlichen Schnittlinie A-A und Fig. 4 einen Querschnitt durch das Strukturbauteil 1 entlang der aus Fig. 2 ersichtlichen Schnittlinie B-B zeigt. Das Strukturbauteil 1 weist einen aus einem Blech gebildeten, stangenförmigen Bauteilkörper 2 auf, der sich in einer Längsrichtung x erstreckt. Der Bauteilkörper 2 umfasst einen aus dem Blech geformten, schalenförmigen Körperteil 3 und eine aus dem Blech geformte und sich entlang ihres Umfangs zwischen zwei umfangsseitigen Enden 4 und 5 erstreckende Aufnahmebuchse 6, die an ihrem umfangsseitigen Ende 4 in den schalenförmigen Körperteil 3 und an ihrem umfangseitigen Ende 5 in eine aus dem Blech geformte und an dem schalenförmigen Körperteil 3 festgelegte Befestigungslasche 7 übergeht, die den schalenförmigen Körperteil 3 über den größten Teil seiner Längserstreckung in Richtung x zu einem geschlossenen Hohlprofil 8 ergänzt, welches im Querschnitt aus Fig. 4 ersichtlich ist. Ferner ist aus Fig. 4 ersichtlich, dass der schalenförmige Körperteil 3 ein offenes Hohlprofil in Form eines U-Profils bildet, welches einen Rücken 9 und zwei Schenkel 10 und 11 aufweist, die über den Rücken 9 miteinander verbunden sind. Zur Bildung des Hohlprofils 8 sind die beiden Schenkel 10 und 11 zusätzlich durch die Befestigungslasche 7 miteinander verbunden, die dazu mit den Schenkeln 10 und 11 verschweißt ist, wobei die zugehörigen Schweißnähte mit den Bezugszeichen 12 gekennzeichnet sind. Die Befestigungslasche 7 verläuft im Bereich des Hohlprofils 8 parallel zu dem Rücken 9 und ist zwischen den Schenkeln 10 und 11 angeordnet.

Die Aufnahmebuchse 6 ist zylinderförmig ausgebildet und an einem axialen Ende des Bauteilkörpers 2 vorgesehen, wobei die Symmetrieachse y der Aufnahmebuchse 6 senkrecht zur Längsrichtung x verläuft. Ferner ist aus Fig. 3 ersichtlich, dass die Befestigungslasche 7 in einer schematisch angedeuteten Mittellängsebene P verläuft, die durch die Symmetrieachse y und die Längsrichtung x definiert ist. An seinem anderen axialen Ende weist der Bauteilkörper 2 einen aus dem Blech gebildeten und mit einer durchgehenden Montageöffnung 18 versehenen Anschlussbereich 13 auf, in dem ein Kugelgelenk 14 an dem Bauteilkörper 2 befestigt ist. Das Kugelgelenk 14 weist ein in der Montageöffnung 18 sitzendes Gelenkgehäuse 15 und einen eine Gelenkkugel 16 umfassenden Kugelzapfen 17 auf, der mit seiner Gelenkkugel 16 bewegbar in dem Gelenkgehäuse 15 gelagert ist und sich aus diesem heraus erstreckt. Der Anschlussbereich 13 geht in den schalenförmigen Körperteil 3 über, der sich von der Aufnahmebuchse 6 bis zu dem Anschlussbereich 13 in Längsrichtung x im Wesentlichen gerade erstreckt. Wie aus den Fig. 1 bis 4 ersichtlich, ist der gesamte Bauteilkörper 2 aus einem einzigen Blech gebildet.

Aus Fig. 3 ist ferner ein in die Aufnahmebuchse 6 eingesetztes Gummilager 19 ersichtlich, welches ein Innenteil 20, eine das Innenteil 20 umringende Außenhülse 21 und einen sich zwischen dem Innenteil 20 und der Außenhülse 21 erstreckenden Gummikörper 22 umfasst. Obwohl das Gummilager 19 in den Fig. 1 und 2 nicht gezeigt ist, kann es auch dort vorhanden sein.

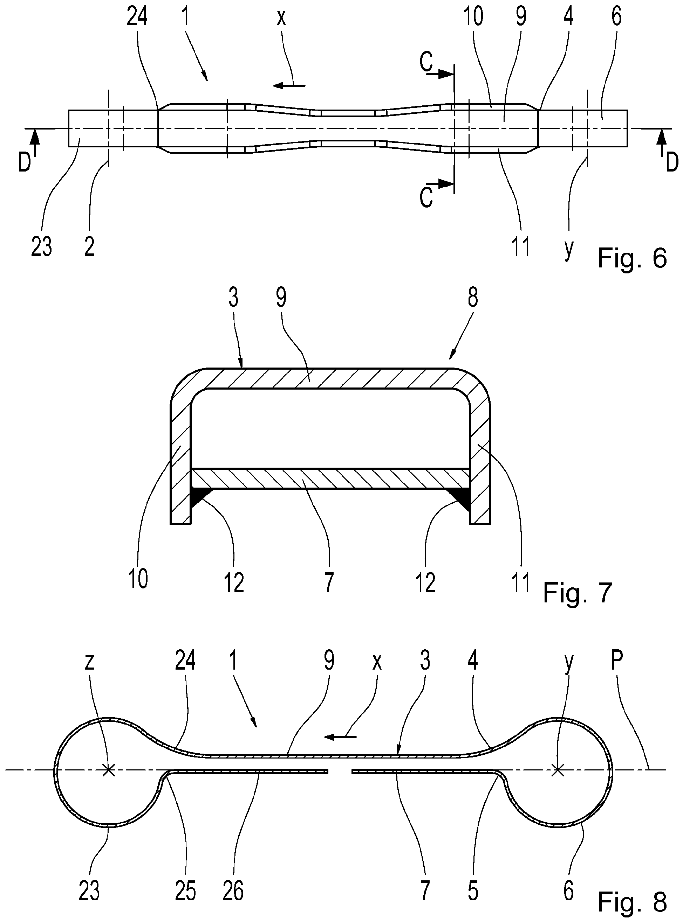

Aus den Fig. 5 bis 8 sind unterschiedliche Ansichten und Teilansichten eines Strukturbauteils 1 gemäß einer zweiten Ausführungsform ersichtlich, wobei zu der ersten Ausführungsform identische oder ähnliche Merkmale mit denselben Bezugszeichen wie bei der ersten Ausführungsform bezeichnet sind. Fig. 5 zeigt eine perspektivische Ansicht des Strukturbauteils 1, Fig. 6 zeigt eine Draufsicht auf das Strukturbauteil 1, Fig. 7 zeigt einen Querschnitt durch das Strukturbauteil 1 entlang der aus Fig. 6 ersichtlichen Schnittlinie C-C und Fig. 8 zeigt in schematischer Darstellung einen Längsschnitt durch das Strukturbauteil 1 entlang der aus Fig. 6 ersichtlichen Schnittlinie D-D.

Im Unterschied zur ersten Ausführungsform ergänzt die Befestigungslasche 7 den schalenförmigen Körperteil 3 von dem einen axialen Ende aus nur über nahezu die Hälfte seiner Längserstreckung zu dem geschlossenen Hohlprofil 8. Dies ist aus dem schematischen Längsschnitt gemäß Fig. 8 ersichtlich, in welchem der Schenkel 10 weggelassen wurde. Ferner ist an dem anderen axialen Ende des Bauteilkörpers 2 anstelle eines Kugelgelenks eine aus dem Blech geformte andere Aufnahmebuchse 23 vorgesehen, die analog zur Aufnahmebuchse 6 ausgebildet ist. Die Aufnahmebuchse 23 erstreckt sich entlang ihres Umfangs zwischen zwei umfangsseitigen Enden 24 und 25, wobei die Aufnahmebuchse 23 an ihrem umfangsseitigen Ende 24 in den schalenförmigen Körperteil 3 und an ihrem umfangseitigen Ende 25 in eine aus dem Blech geformte und an dem schalenförmigen Körperteil 3 festgelegte Befestigungslasche 26 übergeht, die den schalenförmigen Körperteil 3 von dem anderen axialen Ende aus über nahezu die Hälfte seiner Längserstreckung zu einem geschlossenen Hohlprofil ergänzt. Die beiden Befestigungslaschen 7 und 26 zusammen ergänzen den schalenförmigen Körperteil 3 somit über den größten Teil seiner Längserstreckung zu einem geschlossenen Hohlprofil. Die Aufnahmebuchse 23 ist zylinderförmig ausgebildet, wobei die Symmetrieachse z der Aufnahmebuchse 23 senkrecht zur Längsrichtung x verläuft. Ferner verläuft die Symmetrieachse z parallel zur Symmetrieachse y und liegt in der Mittellängsebene P. Die Befestigungslasche 26 ist analog zur Befestigungslasche 7 mit den Schenkeln 10 und 11 des schalenförmigen Körperteils 3 verschweißt.

Abgesehen von diesen Unterschieden stimmt die zweite Ausführungsform im Wesentlichen mit der ersten Ausführungsform überein, sodass zur weiteren Beschreibung der zweiten Ausführungsform auf die Beschreibung der ersten Ausführungsform verwiesen wird. Insbesondere ist der gesamte Bauteilkörper 2 gemäß der zweiten Ausführungsform auch aus einem einzigen Blech gebildet. Ferner ist in die Aufnahmebuchsen 6 und 23 insbesondere jeweils ein Gummilager eingesetzt.

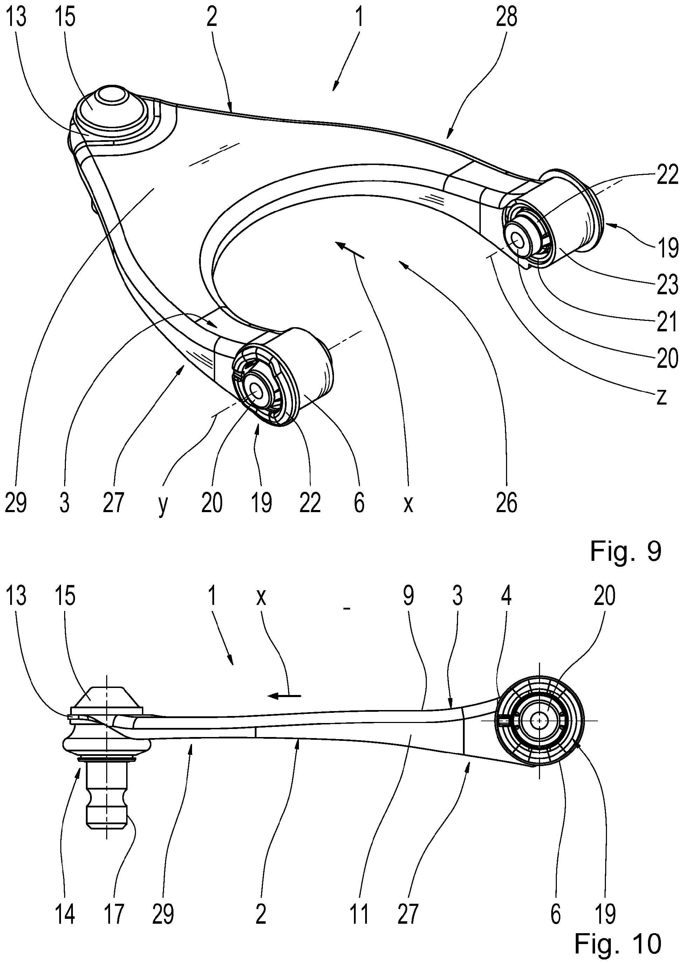

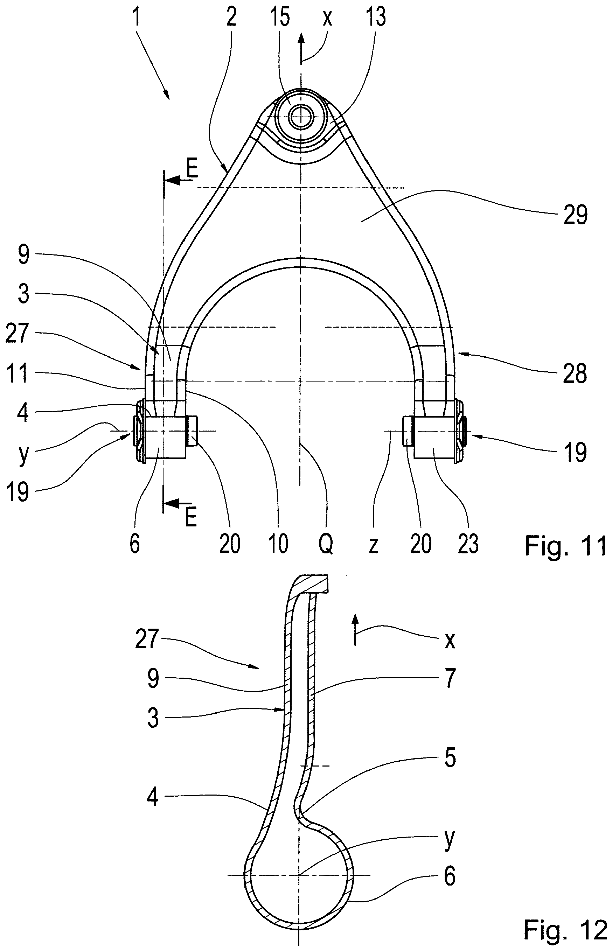

Aus den Fig. 9 bis 12 sind unterschiedliche Ansichten und Teilansichten eines Strukturbauteils 1 gemäß einer dritten Ausführungsform ersichtlich, wobei zu den vorhergehenden Ausführungsformen identische oder ähnliche Merkmale mit denselben Bezugszeichen wie bei den vorhergehenden Ausführungsformen bezeichnet sind. Fig. 9 zeigt eine perspektivische Ansicht des Strukturbauteils 1, Fig. 10 zeigt eine Seitenansicht des Strukturbauteils 1, Fig. 11 zeigt eine Draufsicht auf das Strukturbauteil 1 und Fig. 12 zeigt in schematischer Darstellung einen Längsschnitt durch das Strukturbauteil 1 entlang der aus Fig. 11 ersichtlichen Schnittlinie E-E.

Im Unterschied zu den vorhergehenden Ausführungsformen weist der aus einem Blech gebildete Bauteilkörper 2 zwei aus dem Blech geformte Aufnahmebuchsen 6 und 23 zur Aufnahme von Gummilagern sowie einen aus dem Blech gebildeten Anschlussbereich 13 zur Aufnahme eines Kugelgelenks auf. Ferner umfasst der Bauteilkörper 2 zwei sich in Längsrichtung x erstreckende und aus dem Blech geformte Arme 27 und 28, die in einen den Anschlussbereich 13 umfassenden und aus dem Blech geformten zentralen Bereich 29 des Bauteilkörpers 2 übergehen, wobei an den freien Enden der Arme 27 und 28 jeweils eine der Aufnahmebuchsen 6 bzw. 23 angeordnet ist. Die Symmetrieachsen y und z der zylinderförmigen Aufnahmebuchsen 6 bzw. 23 verlaufen quer zur Längsrichtung x und fallen gemäß der dritten Ausführungsform zusammen.

In dem Anschlussbereich 13 ist ein Kugelgelenk 14 angeordnet, welches ein in dem Anschlussbereich 13 an dem Bauteilkörper 2 befestigtes Gelenkgehäuse 15 und einen Kugelzapfen 17 aufweist, der bewegbar in dem Gelenkgehäuse 15 gelagert ist und sich aus diesem heraus erstreckt. Ferner ist in jede der Aufnahmebuchsen 6 und 23 ein Gummilager 19 eingesetzt, welches ein Innenteil 20, eine das Innenteil 20 umringende Außenhülse 21 und einen sich zwischen dem Innenteil 20 und der Außenhülse 21 erstreckenden Gummikörper 22 umfasst.

Da die Arme 27 und 28 bezüglich einer in Längsrichtung x und quer zu den Symmetrieachsen y und z verlaufenden Symmetrieebene Q spiegelsymmetrisch aufgebaut sind, wird nachfolgend lediglich der Arm 27 beschrieben.

Der Arm 27 umfasst einen aus dem Blech geformten, schalenförmigen Körperteil 3 und die sich entlang ihres Umfangs zwischen zwei umfangsseitigen Enden 4 und 5 erstreckende Aufnahmebuchse 6, die an ihrem umfangsseitigen Ende 4 in den schalenförmigen Körperteil 3 und an ihrem umfangseitigen Ende 5 in eine aus dem Blech geformte und an dem schalenförmigen Körperteil 3 festgelegte Befestigungslasche 7 übergeht, die den schalenförmigen Körperteil 3 zumindest bereichsweise zu einem geschlossenen Hohlprofil ergänzt. Dies ist aus dem schematischen Längsschnitt gemäß Fig. 12 ersichtlich. Der schalenförmige Körperteil 3 ist zumindest bereichsweise als offenes Hohlprofil in Form eines U-Profils ausgebildet, welches einen Rücken 9 und zwei Schenkel 10 und 11 aufweist, die über den Rücken 9 miteinander verbunden sind. Zur Bildung des Hohlprofils sind die beiden Schenkel 10 und 11 zusätzlich durch die Befestigungslasche 7 miteinander verbunden, die dazu mit den Schenkeln 10 und 11 verschweißt ist.

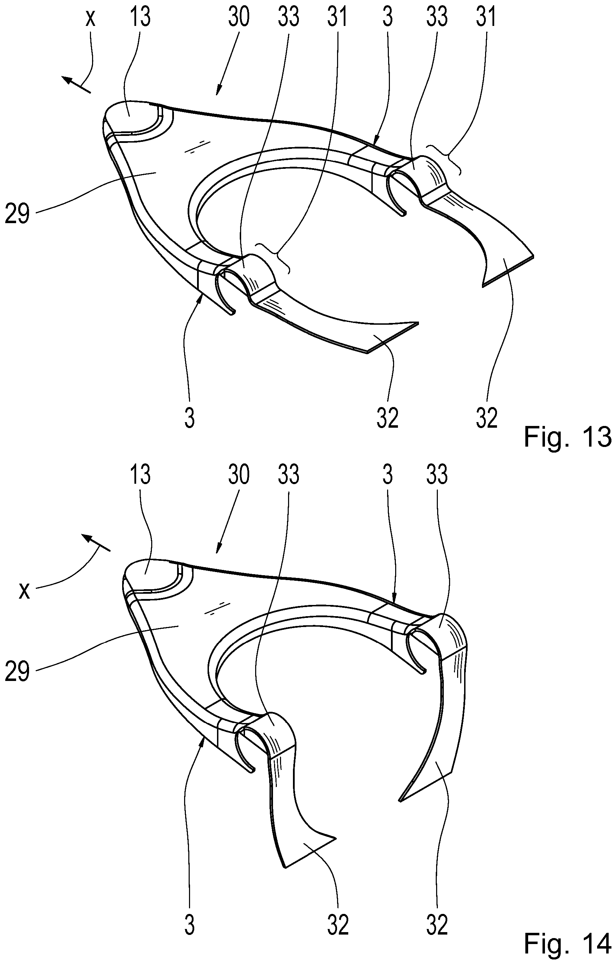

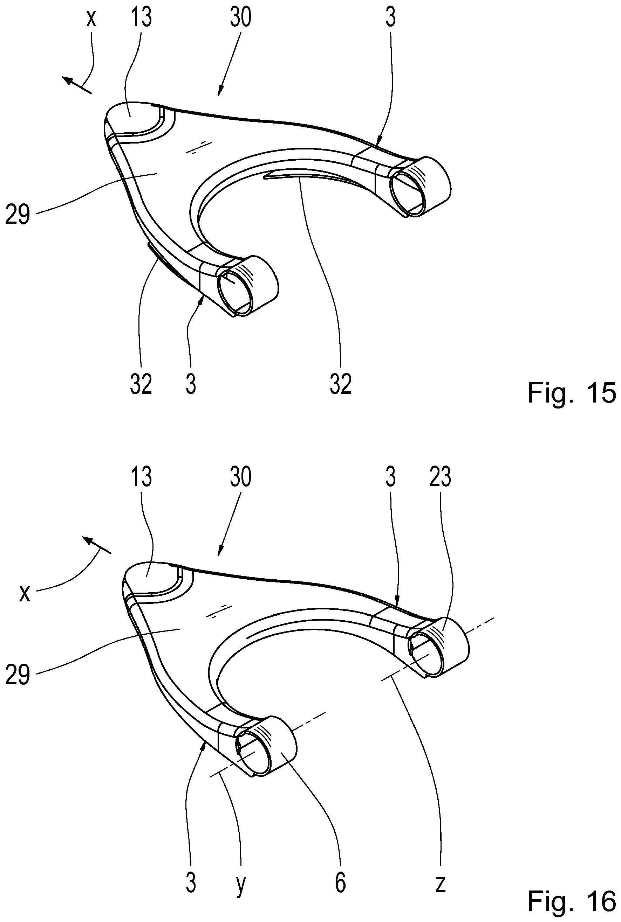

Unter Bezugnahme auf die Fig. 13 bis 14 wird nachfolgend die Herstellung des Bauteilkörpers 2 des Strukturbauteils 1 gemäß der dritten Ausführungsform beschrieben. Durch Umformen eines Blechs wird ein in perspektivischer Ansicht aus Fig. 13 ersichtlicher Rohling 30 des Bauteilkörpers 2 gebildet. Der Rohling 30 weist bereits die schalenförmigen Körperteile 3 der Arme 27 und 28 sowie den zentralen Bereich 29 des zu bildenden Bauteilkörpers 2 auf. Ferner weist der Rohling 30 auch schon den Anschlussbereich 13 auf, in den aber noch ein Montageloch zum Einsetzen des Gelenkgehäuses 15 des Kugelgelenks 14 einzubringen ist. An jeden der schalenförmigen Körperteile 3 schließt sich ein Zwischenbereich 31 an, an den sich wiederum ein Endbereich 32 anschließt. Jeder Zwischenbereich 31 ist in einem dem zentralen Bereich 29 zugewandten Abschnitt 33 bereits gekrümmt ausgebildet. Zum Ausbilden der Aufnahmebuchsen werden die Zwischenbereiche 31 nun gebogen, wobei die Endbereiche 32 mitgenommen werden. Dies ist aus den Fig. 14 und 15 ersichtlich ist, wobei Fig. 15 den Biegevorgang in einem weiter fortgeschrittenen Zustand zeigt als Fig. 14. Nach Abschluss des Biegevorgangs sind die Aufnahmebuchsen 6 und 23 vollständig ausgebildet, was aus Fig. 16 ersichtlich ist. Ferner ist jeder Endbereich 32 in den jeweiligen schalenförmigen Körperteil 3 eingerückt und wird mit diesem verschweißt, sodass jeder Endbereich 32 den jeweiligen schalenförmigen Körperteil 3 zu einem geschlossenen Hohlprofil ergänzt. Die Endbereiche 32 bilden somit nun die Befestigungslaschen. Anschließend werden noch die Gummilager 19 in die Aufnahmebuchsen 6 und 23 eingesetzt, ein Montageloch in den Anschlussbereich 13 eingebracht und das Kugelgelenk 14 in dem Anschlussbereich 13 montiert, sodass sich das Strukturbauteil 1 gemäß Fig. 9 ergibt.

### Bezugszeichen

- 1: Strukturbauteil
- 2: Bauteilkörper
- 3: schalenförmiger Körperteil
- 4: umfangsseitiges Ende der Aufnahmebuchse
- 5: umfangsseitiges Ende der Aufnahmebuchse
- 6: Aufnahmebuchse
- 7: Befestigungslasche
- 8: Hohlprofil
- 9: Rücken des schalenförmigen Körperteils
- 10: Schenkel des schalenförmigen Körperteils
- 11: Schenkel des schalenförmigen Körperteils
- 12: Schweißnaht
- 13: Anschlussbereich
- 14: Kugelgelenk
- 15: Gehäuse des Kugelgelenks
- 16: Gelenkkugel des Kugelzapfens
- 17: Kugelzapfen des Kugelgelenks
- 18: Montageöffnung im Anschlussbereich
- 19: Gummilager
- 20: Innenteil des Gummilagers
- 21: Außenhülse des Gummilagers
- 22: Gummikörper des Gummilagers
- 23: Aufnahmebuchse
- 24: umfangsseitiges Ende der Aufnahmebuchse
- 25: umfangsseitiges Ende der Aufnahmebuchse
- 26: Befestigungslasche
- 27: Arm des Bauteilkörpers
- 28: Arm des Bauteilkörpers
- 29: zentraler Bereich des Bauteilkörpers
- 30: Rohling des Bauteilkörpers
- 31: Zwischenbereich des Rohlings
- 32: Endbereich des Rohlings
- 33: Abschnitt des Zwischenbereichs

- P: Mittellängsebene
- Q: Symmetrieebene
- x: Längsrichtung
- y: Symmetrieachse
- z: Symmetrieachse

## Patentansprüche

1. Strukturbauteil für ein Kraftfahrzeug, mit einem aus einem Blech gebildeten Bauteilkörper (2), der wenigstens einen aus dem Blech geformten, schalenförmigen Körperteil (3) und wenigstens eine aus dem Blech geformte und sich entlang ihres Umfangs zwischen zwei umfangsseitigen Enden (4, 5) erstreckende Aufnahmebuchse (6) umfasst, die an einem ihrer umfangsseitigen Enden (4) in den schalenförmigen Körperteil (3) und an einem anderen ihrer umfangsseitigen Enden (5) in eine aus dem Blech geformte und an dem schalenförmigen Körperteil (3) festgelegte Befestigungslasche (7) übergeht, wobei der schalenförmige Körperteil (3) unter Zwischenschaltung der Aufnahmebuchse (6) einstückig in die Befestigungslasche (7) übergeht, **dadurch gekennzeichnet, dass** die Befestigungslasche (7) den schalenförmigen Körperteil (3) zumindest bereichsweise zu einem geschlossenen Hohlprofil (8) ergänzt und der schalenförmige Körperteil (3) einen Rücken (9) und zwei sich von diesem wegerstreckende, einander gegenüberliegende Schenkel (10, 11) aufweist, die über den Rücken (9) miteinander verbunden sind, wobei die Befestigungslasche (7) im Abstand zu dem Rücken (9) zwischen den beiden Schenkeln (10, 11) verläuft.

2. Strukturbauteil nach Anspruch 1, **dadurch gekennzeichnet, dass** der schalenförmige Körperteil (3) zumindest bereichsweise als offenes Hohlprofil ausgebildet ist.

3. Strukturbauteil nach Anspruch 1 oder 2, **dadurch gekennzeichnet, dass** die Befestigungslasche (7) mit dem schalenförmigen Körperteil (3) verschweißt ist.

4. Strukturbauteil nach Anspruch 1, **dadurch gekennzeichnet, dass** die Befestigungslasche (7) parallel zu dem Rücken (9) verläuft.

5. Strukturbauteil nach Anspruch 1 oder 4, **dadurch gekennzeichnet, dass** die Befestigungslasche (7) mit den Schenkeln (10, 11) verschweißt ist.

6. Strukturbauteil nach einem der vorangehenden Ansprüche, **dadurch gekennzeichnet, dass** der schalenförmige Körperteil (3) zumindest bereichsweise als U-Profil ausgebildet ist.

7. Strukturbauteil nach einem der vorangehenden Ansprüche, **dadurch gekennzeichnet, dass** die Aufnahmebuchse (6) zylinderförmig ausgebildet ist.

8. Strukturbauteil nach einem der vorangehenden Ansprüche, **dadurch gekennzeichnet, dass** in die Aufnahmebuchse (6) ein Elastomerlager (19) eingesetzt ist.

9. Strukturbauteil nach einem der vorangehenden Ansprüche, **dadurch gekennzeichnet, dass** der Bauteilkörper (2) sich in einer Längsrichtung (x) erstreckt und die Aufnahmebuchse (6) an einem axialen Ende des Bauteilkörpers (2) vorgesehen ist.

10. Strukturbauteil nach den Ansprüchen 8 und 9, **dadurch gekennzeichnet, dass** im Abstand zu der Aufnahmebuchse (6) ein Gelenk (14) oder anderes Elastomerlager an dem Bauteilkörper (2) befestigt ist.

11. Strukturbauteil nach Anspruch 10, **dadurch gekennzeichnet, dass** das Gelenk (14) oder andere Elastomerlager an einem anderen axialen Ende des Bauteilkörpers (2) vorgesehen ist.

12. Verfahren zur Herstellung eines einen Bauteilkörper (2) umfassenden Strukturbauteils (1) für ein Kraftfahrzeug, wobei zur Bildung des Bauteilkörpers (2) ein Blech zu einem Rohling (30) mit wenigstens einem schalenförmigen Körperteil (3) umgeformt wird, wenigstens ein sich an den schalenförmigen Körperteil (3) anschließender Zwischenbereich (31) des Rohlings (30) zu einer Aufnahmebuchse (6) umgeformt wird und ein sich an den Zwischenbereich (31) anschließender Endbereich (32) des Rohlings (30) an dem schalenförmigen Körperteil (3) festgelegt wird und somit eine Befestigungslasche (7) bildet, wobei der schalenförmige Körperteil (3) unter Zwischenschaltung der Aufnahmebuchse (6) einstückig in die Befestigungslasche (7) übergeht, **dadurch gekennzeichnet, dass** der Endbereich (32) des Rohlings (30) derart an dem schalenförmigen Körperteil (3) festgelegt wird, dass die Befestigungslasche (7) den schalenförmigen Körperteil (3) zumindest bereichsweise zu einem geschlossenen Hohlprofil (8) ergänzt und der schalenförmige Körperteil (3) einen Rücken (9) und zwei sich von diesem wegerstreckende, einander gegenüberliegende Schenkel (10, 11) aufweist, die über den Rücken (9) miteinander verbunden sind, wobei die Befestigungslasche (7) im Abstand zu dem Rücken (9) zwischen den beiden Schenkeln (10, 11) verläuft.

13. Verfahren nach Anspruch 12, **dadurch gekennzeichnet, dass** in die Aufnahmebuchse (6) ein Elastomerlager (19) eingesetzt wird.

14. Verfahren nach Anspruch 13, **dadurch gekennzeichnet, dass** im Abstand zu der Aufnahmebuchse (6) ein Gelenk (14) oder anderes Elastomerlager an dem Bauteilkörper (2) befestigt wird.

## Claims

1. Structural component for a motor vehicle, having a component body (2) which is formed from a metal sheet and comprises at least one shell-shaped body part (3) which is formed from the metal sheet and at least one locating bush (6) which is formed from the metal sheet, extends along its circumference between two circumferential-side ends (4, 5), and merges, at one of its circumferential-side ends (4), into the shell-shaped body part (3) and, at another of its circumferential-side ends (5), into a fastening bracket (7) which is formed from the metal sheet and is fixed on the shell-shaped body part (3), wherein the shell-shaped body part (3) merges integrally into the fastening bracket (7) with the locating bush (6) being connected in between, **characterized in that** the fastening bracket (7) supplements the shell-shaped body part (3) at least in regions to form a closed hollow profile (8), and the shell-shaped body part (3) has a back (9) and two limbs (10, 11) which extend away from the latter, lie opposite one another, and are connected to one another via the back (9), wherein the fastening bracket (7) runs between the two limbs (10, 11) at a spacing from the back (9).

2. Structural component according to Claim 1, **characterized in that** the shell-shaped body part (3) is configured at least in regions as an open hollow profile.

3. Structural component according to Claim 1 or 2, **characterized in that** the fastening bracket (7) is welded to the shell-shaped body part (3).

4. Structural component according to Claim 1, **characterized in that** the fastening bracket (7) runs parallel to the back (9).

5. Structural component according to Claim 1 or 4, **characterized in that** the fastening bracket (7) is welded to the limbs (10, 11).

6. Structural component according to one of the preceding claims, **characterized in that** the shell-shaped body part (3) is configured at least in regions as a U-profile.

7. Structural component according to one of the preceding claims, **characterized in that** the locating bush (6) is of cylindrical configuration.

8. Structural component according to one of the preceding claims, **characterized in that** an elastomeric bearing (19) is inserted into the locating bush (6).

9. Structural component according to one of the preceding claims, **characterized in that** the component body (2) extends in a longitudinal direction (x), and the locating bush (6) is provided at an axial end of the component body (2).

10. Structural component according to Claims 8 and 9, **characterized in that** a joint (14) or another elastomeric bearing is fastened to the component body (2) at a spacing from the locating bush (6).

11. Structural component according to Claim 10, **characterized in that** the joint (14) or the other elastomeric bearing is provided at another axial end of the component body (2).

12. Method for producing a structural component (1) for a motor vehicle, which structural component (1) comprises a component body (2), wherein, in order to form the component body (2), a metal sheet is formed into a blank (30) with at least one shell-shaped body part (3), at least one intermediate region (31) of the blank (30), which intermediate region (31) adjoins the shell-shaped body part (3), is formed into a locating bush (6), and an end region (32) of the blank (30), which end region (32) adjoins the intermediate region (31), is fixed on the shell-shaped body part (3) and therefore forms a fastening bracket (7), wherein the shell-shaped body part (3) merges integrally into the fastening bracket (7) with the locating bush (6) being connected in between, **characterized in that** the end region (32) of the blank (30) is fixed on the shell-shaped body part (3) in such a way that the fastening bracket (7) supplements the shell-shaped body part (3) at least in regions to form a closed hollow profile (8), and the shell-shaped body part (3) has a back (9) and two limbs (10, 11) which extend away from the latter, lie opposite one another, and are connected to one another via the back (9), wherein the fastening bracket (7) runs between the two limbs (10, 11) at a spacing from the back (9).

13. Method according to Claim 12, **characterized in that** an elastomeric bearing (19) is inserted into the locating bush (6).

14. Method according to Claim 13, **characterized in that** a joint (14) or another elastomeric bearing is fastened to the component body (2) at a spacing from the locating bush (6).

## Revendications

1. Composant structural pour un véhicule automobile, comprenant un corps de composant (2) formé à partir d'une tôle, lequel comporte au moins une partie de corps (3) en forme de coque et formée à partir de la tôle et au moins une douille de réception (6) formée à partir de la tôle et s'étendant le long de sa périphérie entre deux extrémités périphériques (4, 5), laquelle douille de réception se prolonge, à l'une de ses extrémités périphériques (4), par la partie de corps (3) en forme de coque et, à une autre de ses extrémités périphériques (5), par une patte de fixation (7) formée à partir de la tôle et fixée à la partie de corps (3) en forme de coque, la partie de corps (3) en forme de coque se prolongeant d'une seule pièce par la patte de fixation (7) par l'intermédiaire de la douille de réception (6), **caractérisé en ce que** la patte de fixation (7) complète la partie de corps (3) en forme de coque au moins dans certaines zones pour former un profilé creux fermé (8) et la partie de corps (3) en forme de coque comprend un dos (9) et deux branches (10, 11) se faisant face et s'éloignant de celui-ci, lesquelles sont reliées l'une à l'autre par le biais du dos (9), la patte de fixation (7) s'étendant à distance du dos (9) entre les deux branches (10, 11).

2. Composant structural selon la revendication 1, **caractérisé en ce que** la partie de corps (3) en forme de coque est réalisée, au moins dans certaines zones, sous forme de profilé creux ouvert.

3. Composant structural selon la revendication 1 ou 2, **caractérisé en ce que** la patte de fixation (7) est soudée sur la partie de corps (3) en forme de coque.

4. Composant structural selon la revendication 1, **caractérisé en ce que** la patte de fixation (7) s'étend parallèlement au dos (9).

5. Composant structural selon la revendication 1 ou 4, **caractérisé en ce que** la patte de fixation (7) est soudée sur les branches (10, 11).

6. Composant structural selon l'une quelconque des revendications précédentes, **caractérisé en ce que** la partie de corps (3) en forme de coque est réalisée, au moins dans certaines zones, sous forme de profilé en U.

7. Composant structural selon l'une quelconque des revendications précédentes, **caractérisé en ce que** la douille de réception (6) est réalisée de manière cylindrique.

8. Composant structural selon l'une quelconque des revendications précédentes, **caractérisé en ce qu'**un palier en élastomère (19) est inséré dans la douille de réception (6).

9. Composant structural selon l'une quelconque des revendications précédentes, **caractérisé en ce que** le corps de composant (2) s'étend dans une direction longitudinale (x) et la douille de réception (6) est prévue à une extrémité axiale du corps de composant (2).

10. Composant structural selon la revendication 8 ou 9, **caractérisé en ce qu'**une articulation (14) ou un autre palier en élastomère est fixé(e) au corps de composant (2) à distance de la douille de réception (6).

11. Composant structural selon la revendication 10, **caractérisé en ce que** l'articulation (14) ou l'autre palier en élastomère est prévu(e) à une autre extrémité axiale du corps de composant (2).

12. Procédé de fabrication d'un composant structural (1), comportant un corps de composant (2), pour un véhicule automobile et, pour former le corps de composant (2), une tôle étant façonnée de manière à produire une ébauche (30) dotée d'au moins une partie de corps (3) en forme de coque, au moins une zone intermédiaire (31), se raccordant à la partie de corps (3) en forme de coque, de l'ébauche (30) étant façonnée de manière à produire une douille de réception (6) et une zone d'extrémité (32), se raccordant à la zone intermédiaire (31), de l'ébauche (30) étant fixée à la partie de corps (3) en forme de coque et formant ainsi une patte de fixation (7), la partie de corps (3) en forme de coque se prolongeant d'une seule pièce par la patte de fixation (7) par l'intermédiaire de la douille de réception (6), **caractérisé en ce que** la zone d'extrémité (32) de l'ébauche (30) est fixée à la partie de corps (3) en forme de coque de telle sorte que la patte de fixation (7) complète la partie de corps (3) en forme de coque au moins dans certaines zones pour former un profilé creux fermé (8) et la partie de corps (3) en forme de coque comprend un dos (9) et deux branches (10, 11) se faisant face et s'éloignant de celui-ci, lesquelles sont reliées l'une à l'autre par le biais du dos (9), la patte de fixation (7) s'étendant à distance du dos (9) entre les deux branches (10, 11).

13. Procédé selon la revendication 12, **caractérisé en ce qu'**un palier en élastomère (19) est inséré dans la douille de réception (6).

14. Procédé selon la revendication 13, **caractérisé en ce qu'**une articulation (14) ou un autre palier en élastomère est fixé(e) au corps de composant (2) à distance de la douille de réception (6).
